(19) Europäisches Patentamt / European Patent Office / Office européen des brevets

(11) **EP 4 535 679 A2**

(12) **EUROPEAN PATENT APPLICATION**

(43) Date of publication:
**09.04.2025** Bulletin 2025/15

(21) Application number: **24204607.6**

(22) Date of filing: **04.10.2024**

(51) International Patent Classification (IPC):
**H04B 7/024** (2017.01)    **H04B 17/21** (2015.01)
**H04L 5/00** (2006.01)    **H04W 56/00** (2009.01)
**H04B 7/01** (2006.01)    **H04B 7/06** (2006.01)

(52) Cooperative Patent Classification (CPC):
**H04B 7/024; H04B 7/01; H04B 7/0632;**
**H04B 17/21; H04L 5/0035; H04L 5/0048;**
**H04W 56/001**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(30) Priority: **05.10.2023 US 202363588182 P**
          **27.09.2024 US 202418899808**

(71) Applicant: **Samsung Electronics Co., Ltd**
**Suwon-si, Gyeonggi-do 16677 (KR)**

(72) Inventors:
• **SHAHMOHAMMADIAN, Hoda**
**San Jose, CA, 95134 (US)**
• **BAE, Jung Hyun**
**San Jose, CA, 95134 (US)**

(74) Representative: **Kuhnen & Wacker**
**Patent- und Rechtsanwaltsbüro PartG mbB**
**Prinz-Ludwig-Straße 40A**
**85354 Freising (DE)**

(54) **USER EQUIPMENT ASSISTED INTER-TRANSMISSION AND RECEPTION POINT CALIBRATION IN COHERENT JOINT TRANSMISSION**

(57)    A system and a method performed by a user equipment, UE, for assisting inter-transmission and reception point, TRP, calibration in a coherent joint transmission, CJT, system are disclosed. The method includes transmitting, by the UE, calibration assistance information to at least one TRP included in a plurality of TRPs; and receiving, by the UE, a transmission from the at least one TRP that has been pre-compensated for at least one synchronization impairment between the plurality of TRPs based on the calibration assistance information.

**FIG. 3**

**Description**

**TECHNICAL FIELD**

The disclosure generally relates to enhancing coherent joint transmission (CJT) in fifth-generation (5G) networks. More particularly, the subject matter disclosed herein pertains to user equipment (UE) assisted calibration for inter-transmission reception point (TRP) synchronization.

**SUMMARY**

In the framework of the 3rd Generation Partnership Project (3GPP), joint transmission (JT) is categorized into CJT and non-coherent JT (NCJT). Due to practical impairments and synchronization challenges, the current joint multi-transmission and reception point (TRP) coordination mainly relies on the NCJT scheme, where each layer is transmitted from one TRP only. CJT assumes that a gNodeB (gNB) in a cooperation set of TRPs has detailed channel state information (CSI) of the serving links from all cooperating TRPs to the same UE. In such a scenario, all the TRPs in a cooperation set jointly transmit the same message to the UE on the same time and frequency resources. This requires an ideal backhaul where all cooperating TRPs are fully synchronized in time and frequency. The transmitted signals from different TRPs are jointly precoded to achieve coherent combining at the served UE.

To address the growing demand for high-performance multi-TRP transmissions, the employment of centralized radio access network (C-RAN) architecture in real networks may be considered. This requires enhancement of the current 5G framework to facilitate intra-site CJT, which should account for practical limitations of non-collocated TRP deployment, including inter-TRP delay, phase, and frequency offsets (or impairments). 3GPP Release (Rel.) 18 targeted standardization of CJT multi-TRP transmission through some enhancement on CSI acquisition and sounding reference signal (SRS) transmission based on channel reciprocity in time-division duplex (TDD). Although significant performance gain is expected with the CJT scheme in multi-TRP transmission at least for intra-site CJT scenarios, achieving such gain is conditioned on the compensation of non-ideal impairments in real multi-TRP deployments such as inter-site and/or inter-TRP CJT scenarios.

One issue with the above approach is the challenge of fully synchronizing cooperating TRPs in time and frequency. Inter-TRP time synchronization can be challenging due to downlink (DL) reference timing offsets between TRPs, as well as different propagation delays from different TRPs to a UE. This may cause frequency selectivity of a composite channel. Furthermore, inter-TRP carrier synchronization can be challenging due to independent local oscillators per TRP, as well as UE mobility. The inter-TRP Doppler frequency offset and phase noise variation due to random fluctuations of each TRP local oscillator may cause time variation of the relative phase of the signal received from different TRPs and hence time selectivity of a composite channel.

To overcome these issues, systems and methods are described herein for UE assisted calibration for inter-TRP synchronization. The proposed schemes apply UE measurements of specific DL reference signals (DL RSs) and provides calibration-assisting information (also referred to as "calibration assistance information") either explicitly or implicitly to the network. This information enables the network to pre-compensate for synchronization impairments, ensuring coherent DL transmissions. Various schemes, including DL RS and demodulation reference signal (DMRS) based methods, are proposed to handle different synchronization challenges in both TDD and frequency-division duplex (FDD) modes.

The above approaches improve on previous methods because they allow for more accurate synchronization of TRPs, leading to enhanced multi-TRP transmission reliability and efficiency. By compensating for delay, phase, and frequency offsets dynamically, the proposed systems and methods improve coherent combining of signals at the UE, resulting in better overall network performance and user experience.

In an embodiment, a method performed by a UE for assisting inter-TRP calibration in a CJT system is disclosed. The method includes transmitting, by the UE, calibration assistance information to at least one TRP included in a plurality of TRPs; and receiving, by the UE, a transmission from the at least one TRP that has been pre-compensated for at least one synchronization impairment between the plurality of TRPs based on the calibration assistance information.

In an embodiment, a UE comprises a memory device; and a processor configured to execute instructions stored on the memory device. The instructions cause the processor to transmit calibration assistance information to at least one TRP included in a plurality of TRPs, and receive a transmission from the at least one TRP that has been pre-compensated for at least one synchronization impairment between the plurality of TRPs based on the calibration assistance information.

**BRIEF DESCRIPTION OF THE DRAWING**

In the following section, the aspects of the subject matter disclosed herein will be described with reference to exemplary embodiments illustrated in the figures, in which:

FIG. 1 illustrates a transmitting device or a receiving device in a communication system, according to an embodiment;

FIG. 2 illustrates deployment of a CJT scheme in a wireless network environment, according to an embodiment;

FIG. 3 illustrates an example of a first operational scheme with two cooperative TRPs in CJT, according to an embodiment;

FIG. 4 illustrates an example of a second operational scheme with two cooperative TRPs in CJT, according to an embodiment;

FIG. 5 illustrates an example of a third operational scheme with two cooperative TRPs in CJT, according to an embodiment;

FIG. 6 illustrates a proposed scheme for DL reference time compensation with two cooperative TRPs, according to an embodiment;

FIG. 7 illustrates an example of a fourth operational scheme with two cooperative TRPs in CJT, according to an embodiment;

FIG. 8 illustrates an example of a fifth operational scheme with two cooperative TRPs in CJT, according to an embodiment;

FIG. 9 is a flowchart of a method performed by a UE for assisting inter-TRP calibration in a CJT system, according to an embodiment;

FIG. 10 is a block diagram of an electronic device in a network environment, according to an embodiment; and

FIG. 11 is a block diagram of a system including a UE and a gNB, according to an embodiment.

## DETAILED DESCRIPTION

In the following detailed description, numerous specific details are set forth in order to provide a thorough understanding of the disclosure. It will be understood, however, by those skilled in the art that the disclosed aspects may be practiced without these specific details. In other instances, well-known methods, procedures, components and circuits have not been described in detail to not obscure the subject matter disclosed herein.

Reference throughout this specification to "one embodiment" or "an embodiment" means that a particular feature, structure, or characteristic described in connection with the embodiment may be included in at least one embodiment disclosed herein. Thus, the appearances of the phrases "in one embodiment" or "in an embodiment" or "according to one embodiment" (or other phrases having similar import) in various places throughout this specification may not necessarily all be referring to the same embodiment. Furthermore, the particular features, structures or characteristics may be combined in any suitable manner in one or more embodiments. In this regard, as used herein, the word "exemplary" means "serving as an example, instance, or illustration." Any embodiment described herein as "exemplary" is not to be construed as necessarily preferred or advantageous over other embodiments. Additionally, the particular features, structures, or characteristics may be combined in any suitable manner in one or more embodiments. Also, depending on the context of discussion herein, a singular term may include the corresponding plural forms and a plural term may include the corresponding singular form. Similarly, a hyphenated term (e.g., "two-dimensional," "pre-determined," "pixel-specific," etc.) may be occasionally interchangeably used with a corresponding non-hyphenated version (e.g., "two dimensional," "predetermined," "pixel specific," etc.), and a capitalized entry (e.g., "Counter Clock," "Row Select," "PIXOUT," etc.) may be interchangeably used with a corresponding non-capitalized version (e.g., "counter clock," "row select," "pixout," etc.). Such occasional interchangeable uses shall not be considered inconsistent with each other.

Also, depending on the context of discussion herein, a singular term may include the corresponding plural forms and a plural term may include the corresponding singular form. It is further noted that various figures (including component diagrams) shown and discussed herein are for illustrative purpose only, and are not drawn to scale. For example, the dimensions of some of the elements may be exaggerated relative to other elements for clarity. Further, if considered appropriate, reference numerals have been repeated among the figures to indicate corresponding and/or analogous elements.

The terminology used herein is for the purpose of describing some example embodiments only and is not intended to be limiting of the claimed subject matter. As used herein, the singular forms "a," "an" and "the" are intended to include the plural forms as well, unless the context clearly indicates otherwise. It will be further understood that the terms "comprises" and/or "comprising," when used in this specification, specify the presence of stated features, integers, steps, operations, elements, and/or components, but do not preclude the presence or addition of one or more other features, integers, steps, operations, elements, components, and/or groups thereof.

It will be understood that when an element or layer is referred to as being on, "connected to" or "coupled to" another element or layer, it can be directly on, connected or coupled to the other element or layer or intervening elements or layers may be present. In contrast, when an element is referred to as being "directly on," "directly connected to" or "directly coupled to" another element or layer, there are no intervening elements or layers present. Like numerals refer to like elements throughout. As used herein, the term "and/or" includes any and all combinations of one or more of the associated listed items.

The terms "first," "second," etc., as used herein, are used as labels for nouns that they precede, and do not imply any type of ordering (e.g., spatial, temporal, logical, etc.) unless explicitly defined as such. Furthermore, the same reference numerals may be used across two or more figures to refer to parts, components, blocks, circuits, units, or modules having the same or similar functionality. Such usage is, however, for simplicity of illustration and ease of discussion only; it does not imply that the construction or architectural details of such components or units are the same across all embodiments or such commonly-referenced parts or modules are the only way to implement some of the example embodiments disclosed herein.

Unless otherwise defined, all terms (including technical and scientific terms) used herein have the same meaning as commonly understood by one of ordinary skill in the art to which this subject matter belongs. It will be further understood that terms, such as those defined in commonly used dictionaries, should be interpreted as having a meaning that is consistent with their meaning in the context of the relevant art and will not be interpreted in an idealized or overly formal sense unless expressly so defined herein.

"Calibration assistance information", as used herein, refers to any data, measurements, signals, or parameters generated by a UE and provided to a network entity, such as a TRP, to assist in synchronizing or calibrating multiple TRPs in a CJT system (assisting in inter-TRP calibration). The information may include, but is not limited to, timing offsets, phase shifts, Doppler frequency offsets, and channel state measurements derived from DL RS(s) or UL RS(s). Calibration assistance information can be conveyed explicitly or implicitly through dedicated signaling or embedded in RS transmissions. The term is intended to encompass any variation of data or measurement that facilitates improving synchronization among TRPs in a wireless communication network.

"TRP", as used herein, refers to a network element that participates in signal transmission and/or reception as part of a wireless communication system, particularly in a CJT scenario. A TRP may be implemented as a base station, gNB, a distributed antenna system, an electronic device, or any other network node capable of transmitting and receiving signals to and from a UE. TRPs may be co-located or distributed across different geographical locations, and they may collaborate to deliver synchronized transmissions to a UE. The term TRP is intended to broadly encompass various network entities that can perform coordinated transmission/reception in multi-TRP systems.

"Synchronization impairment", as used herein, refers to any disruption, delay, phase mismatch, frequency offset, or temporal misalignment that affects the coordinated transmission and reception of signals between a UE and multiple TRPs in a CJT system. Synchronization impairments may arise from factors such as differing propagation delays, clock drift, Doppler effects due to mobility, or independent oscillator phase noise at the TRPs. These impairments can degrade the performance of the CJT system by causing misaligned signal transmission, leading to reduced constructive interference at the UE. The term is intended to cover any condition or issue that disrupts ideal timing, phase, or frequency alignment across the TRPs in a multi-TRP system.

The present disclosure focuses on enhancing the performance of CJT systems by leveraging UE to assist in the calibration and synchronization of multiple TRPs. In CJT, multiple TRPs transmit the same signal to a UE in a coordinated and synchronized manner, which requires precise calibration and synchronization across the TRPs to ensure that the transmitted signals constructively combine at the UE. The present disclosure introduces methods and systems where the UE plays an active role in facilitating this synchronization by generating and transmitting calibration assistance information to the network. The network uses this information to pre-compensate for synchronization impairments across the TRPs, allowing for more accurate and efficient coherent transmission. The pre-compensation may compensate for one or more synchronization impairments, including but not limited to, a disruption, delay, phase mismatch, frequency offset, and/or temporal misalignment that affects the coordinated transmission and reception of signals between a UE and multiple TRPs in a CJT system.

In addition, the present disclosure provides various techniques for how the UE can generate and transmit calibration assistance information, including the use of DL RS(s) and UL RS(s). The UE may transmit this information either explicitly through dedicated signaling or implicitly as part of its normal communication with the network. Additionally, the disclosure describes methods for prioritizing calibration-assisting reporting and dynamically managing the UE's processing resources to support multiple simultaneous calibration reports.

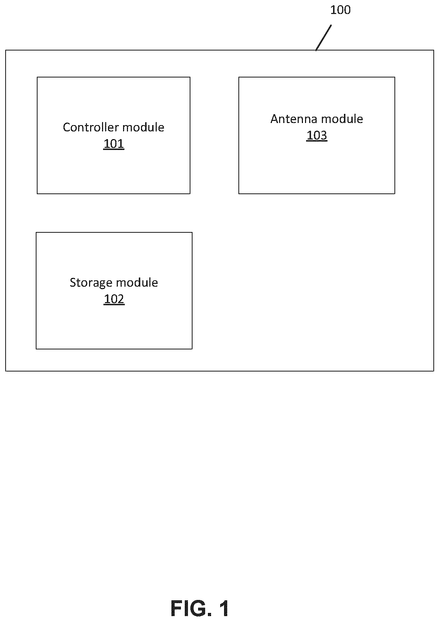

FIG. 1 illustrates a transmitting device or a receiving device in a communication system, according to an embodiment.

Referring to FIG. 1, the device 100 may be a UE (e.g., a client device) or a gNB and includes a controller module 101 (e.g., a processor), a storage module 102, and an antenna module 103.

The controller module 101, storage module 102, and antenna module 103 may be structural components to facilitate efficient and accurate transmission or reception of wireless signals. As described herein, the wireless signals that are transmitted may be compressed (e.g., encoded) prior to transmission and reassembled (e.g., decoded) after reception. The device 100 may include all of the structural components necessary to compress, transmit, receive, and/or decompress the wireless signals.

The controller module 101 may include at least one processor and may execute instructions that are stored in the storage module 102. For example, the controller module 101 may execute instructions for performing compression, decompression, and signaling techniques described herein. In addition, the controller module 101 may include a digital signal processor (DSP) for performing signal processing on a signal. The DSP may include one or more processing modules for functions such as synchronization, equalization, and demodulation. The processing modules may be implemented using one or more DSP techniques, such as fast Fourier transform (FFT), inverse FFT (IFFT), and digital filtering. Additionally or alternatively, the controller module 101 may include an application processor for running user applications on the device 100, such as web browsers, video players, and other software applications. The application processor may include one or more processing units, memory devices, and input or output interfaces.

The storage module 102 may include transitory or non-transitory memory storing instructions that, when executed, cause the controller module 101 to perform steps to execute signaling techniques described herein. In addition, the storage module 102 may include a protocol stack for implementing communication protocols. The protocol stack may include one or more layers, such as a physical layer, a medium access control (MAC) layer, a radio link control (RLC) layer, and a packet data convergence protocol (PDCP) layer.

The antenna module 103 may include one or more antennas for wirelessly transmitting and receiving signals to a base station, UE or another device. For example, the antenna module 103 may receive a signal transmitted by a base station and convert it into an electrical signal.

The device 100 may be a receiver of a wireless communication system (e.g., the UE in 5G NR system) in DL. Additionally or alternatively, the UE may modulate (e.g., compress) and transmit signals to the gNB. Also, the device 100 may also transmit a signal via the antenna module 103 and, therefore, may be a transmitter or a gNB.

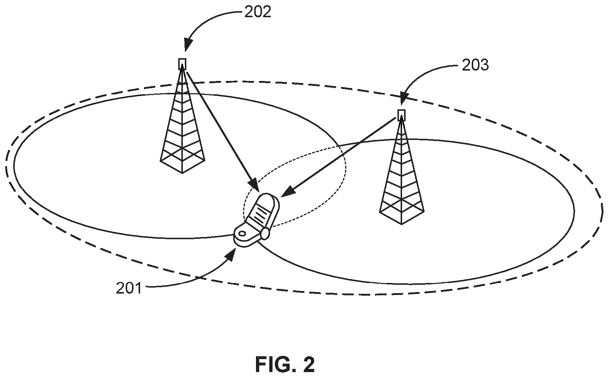

FIG. 2 illustrates deployment of a CJT scheme in a wireless network environment, according to an embodiment.

Referring to FIG. 2 a UE 202 is shown in a CJT environment. In this figure, base station (e.g., gNB or TRP) 202 and base station (e.g., gNB or TRP) 203 are positioned such that their coverage areas overlap. The UE 201, depicted as a cellular device, is located within this overlapping region, allowing it to simultaneously receive signals from both base stations 202 and 203. The arrows indicate the communication paths from the base stations 202 and 203 to the UE 101, with the potential for the UE 201 to receive coordinated transmissions from both base stations 202 and 203. Synchronization and coordination between multiple TRPs may be necessary to enhance signal quality and overall network performance.

Up to 3GPP Rel. 18, a maximum of two transmission control information (TCI) states could be indicated simultaneously to CJT-based physical downlink shared channel (PDSCH) reception according to a UE capability. The quasi co-located (QCL) type and assumption of these indicated unified TCI states can be radio resource control (RRC) configured as either both indicated unified TCI states with respect to QCL-Type A or both indicated unified TCI states with respect to QCL-Type A except for QCL parameters {Doppler shift, Doppler spread} of the second indicated unified TCI state, according to UE capability.

In CJT deployments such as inter-site and/or inter-TRP scenarios, some configurations would substantially constrain CJT scheme configuration by the network due to practical impairments. A straightforward possible solution to facilitate inter-site CJT scenarios is that the maximum number of TCI states that can be indicated simultaneously to CJT-based PDSCH reception can be increased up to the number of cooperating TRPs. This would create opportunities for the UE to acknowledge and measure different QCL assumptions for each path from a non-collocated TRP. Furthermore, with multiple QCL reference signals (RSs) for the same DMRS ports where each QCL RS corresponds to one TRP, dynamic switching can be performed with less RS overhead for QCL configuration. However, such per-TRP QCL configuration would impose significant complexity on UE implementation.

To address this issue, enhanced DL transmissions where the network, in collaboration with the UE, pre-compensate for synchronization impairments for CJT-based PDSCH and/or physical downlink control channel (PDCCH) transmission(s) is proposed. This collaboration can be achieved through explicit UE assistance reporting, where the UE measures a specific DL RS and reports calibration-assisting information to the network. Additionally or alternatively, collaboration can occur implicitly through a UL RS transmission in response to UE measurements of a specific DL RS. This may involve a UL RS transmission based on a channel reciprocity assumption, which may not necessarily be applicable to frequency division duplex (FDD) transmissions or may not be a realistic assumption for time-division duplex (TDD) due to different radio frequency (RF) architectures and impairments for DL and UL transmission paths.

The DL RS transmission for UE calibration-assisting reporting can be accomplished either through separate DL resource configuration and transmission, or as part of the CSI acquisition framework with shared resource configuration and transmission. The former approach has less resource overhead efficiency but allows the network to pre-compensate subsequent CSI RS transmission for CJT CSI acquisition according to UE calibration-assisting reporting. Additionally, separate DL RS transmission provides an opportunity (e.g., implicit indication to a UE) to restrict measurement averaging and filtering at the UE for more accurate calibration and CSI reporting. For example, aperiodic calibration-assisting reporting can be triggered at the UE with aperiodic DL resources. The UE can measure these DL resources with restricted averaging and filtering (i.e., separately from existing CSI measurements) and report calibration information to the network. The network can then trigger aperiodic CJT CSI acquisition with reconfigured resources (e.g., aperiodic resources) that are pre-compensated for inter-TRP calibration impairments. Any combination of the two aforementioned mechanisms is also possible.

According to an embodiment, a first operational scheme may include a three-step procedure: a DL RS, a DMRS and a PDCCH are transmitted in a TRP-specific manner; the UE measures and explicitly or implicitly shares calibration assistance information with the network according to UE capability; and the network pre-compensates time and/or frequency synchronization impairment for PDSCH transmission.

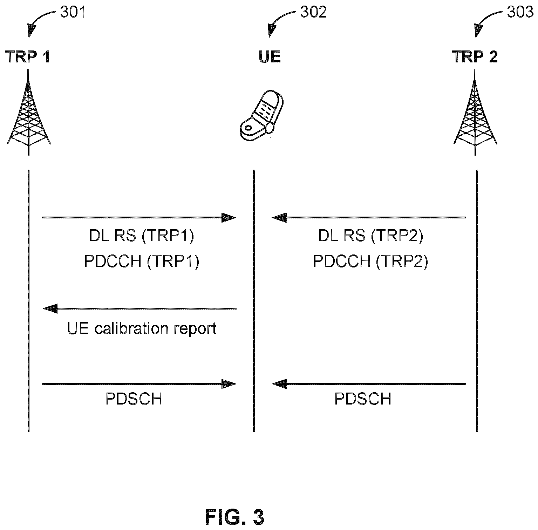

FIG. 3 illustrates an example of a first operational scheme with two cooperative TRPs in CJT, according to an embodiment.

Referring to FIG. 3, the process of UE-assisted calibration for CJT involving two TRPs, TRP 1 301 and TRP 2 303, in communication with a UE 302 in the context of the first operational scheme is illustrated. In this figure, the sequence of operations begins with each TRP 301 and 303 transmitting a DL RS and a PDCCH to the UE 302. TRP 1 301 sends a DL RS (TRP1) and a PDCCH (TRP1), while TRP 2 303 sends a DL RS (TRP2) and a PDCCH (TRP2). The UE 302 measures these signals and generates a calibration report, which it sends back to the network (e.g., TRP 1 301). This calibration report assists the network in pre-compensating for any synchronization impairments. Following this calibration process, both TRPs 301 and 303 transmit the PDSCH to the UE 302.

In the first operational scheme, the first step involves DL RS transmission for the purpose of frequency offset and delay spread estimation at the UE. In the second step, either the UE explicitly reports calibration-assisting information to the network (applicable to both TDD and FDD CJT transmissions) or implicitly assists the network by UL RS transmission (applicable to TDD CJT transmission). This calibration reporting can be transmitted to one TRP (e.g., using one beam) or to all cooperating TRPs in the CJT scheme.

Another UE-assisted calibration scheme contemplated herein is a second operational scheme that may include a three step procedure: a DL RS is transmitted in a TRP-specific manner; the UE measures and explicitly or implicitly shares calibration assistance information with the network; and the network pre-compensates synchronization impairment for PDSCH and/or PDCCH transmission.

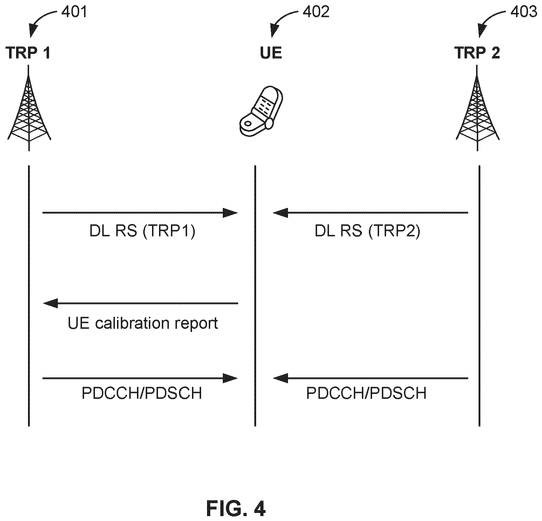

FIG. 4 illustrates an example of a second operational scheme with two cooperative TRPs in CJT, according to an embodiment.

Referring to FIG. 4, the process of UE-assisted calibration for CJT involving two TRPs, TRP 1 401 and TRP 2 403, in communication with a UE 402 in the context of the second operational scheme is illustrated. In this figure, the three-step procedure starts with DL RS transmission from TRP 1 401 and TRP 2 403 to UE 402 for the purpose of frequency offset and delay spread estimation at the UE 402. In the second step, either the UE 402 explicitly reports calibration-assisting information (UE calibration report) to the network or implicitly assists the network by UL RS transmission. The UE calibration report can be transmitted to one TRP or to all cooperating TRPs in the CJT scheme. In the implicit calibration assistance case, the DL RS transmission in the first step may also be considered as the QCL RS for the UL RS transmission. Following this calibration process, both TRPs 401 and 403 transmit the PDCCH and/or PDSCH to the UE 402.

Since such DL RS transmission can occur with a semi-statically configured periodicity or once as an aperiodic transmission, this step of the procedure may not be required for every DMRS PDCCH and PDSCH transmission.

Thus, a third operational scheme is proposed as a two-step procedure that starts with UL RS transmission.

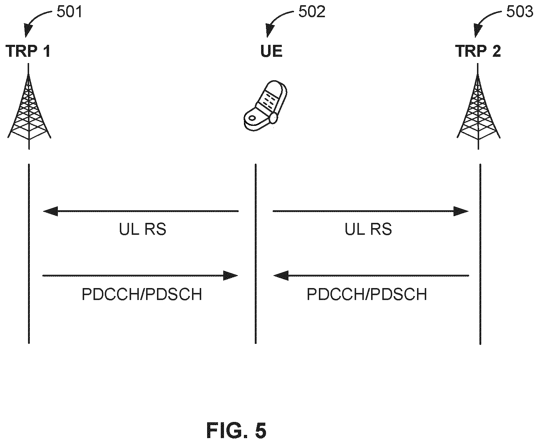

FIG. 5 illustrates an example of a third operational scheme with two cooperative TRPs in CJT, according to an embodiment.

Referring to FIG. 5, the process of UE-assisted calibration for CJT involving two TRPs, TRP 1 501 and TRP 2 502, in communication with a UE 502 in the context of the third operational scheme is illustrated.

The UE 502 shares calibration assistance information according to UE capability implicitly with the network (e.g., TRP 1 501 and/or TRP 2 503) by UL RS transmission. The network (e.g., TRP 1 501 and/or TRP 2 503) pre-compensates time and/or frequency synchronization impairment for PDSCH and/or PDCCH transmission.

Any combination of the above schemes is also possible, where the network relies on some UE calibration reporting as well as UL RS transmissions.

PDCCH/PDSCH QCL assumptions will now be described.

The proposed first operational scheme may require up to the number of cooperating TRPs indicated unified TCI states, all with respect to QCL-Type A (i.e., associated with QCL parameters {average delay, delay spread, Doppler shift, Doppler spread}) for DL RS and PDCCH transmission. According to UE capability and based on achieved calibration-assisting information at the network as a result of UE collaboration, the consideration of QCL type and assumption for CJT-based PDSCH transmission can be based on one or more of the following conditions:

- If the network pre-compensates both time and frequency synchronization impairments (i.e., fully synchronized PDSCH transmissions from different TRPs), only one indicated TCI state with respect to QCL-Type A would be sufficient for PDSCH transmissions from different TRPs. If the network pre-compensates only for frequency synchronization impairments, up to the number of cooperating TRPs unified TCI states can be RRC configured for PDSCH transmission. The QCL assumption of those indicated unified TCI states is with respect to QCL-Type A for one specific predefined/preconfigured unified TCI state and with respect to QCL-Type A except for QCL parameters {Doppler shift, Doppler spread} for the rest of the indicated unified TCI states. The one specific unified TCI state with respect to QCL-Type A can be determined at the UE based on a predefined rule such as first or last or with a specific ID TCI state, or alternatively can be determined based on a semi-static configuration by RRC or dynamic configuration by an MAC CE or DCI indication.

- If the network pre-compensates only for Doppler shift impairment, due to the fact that Doppler spread is more of an environment parameter rather than an inter-TRP calibration error, up to the number of cooperating TRPs unified TCI states can be RRC configured for PDSCH transmission. The QCL assumption of those indicated unified TCI states is with respect to QCL-Type A for one specific predefined/preconfigured unified TCI state and with respect to QCL-Type A except for QCL parameters {Doppler shift} for the rest of the indicated unified TCI states.

- If the network pre-compensates only for time synchronization impairment, up to the number of cooperating TRPs can be RRC configured for PDSCH transmission. The QCL assumption of those indicated unified TCI states is with respect to QCL-Type A for one unified TCI state and with respect to QCL-Type B (i.e., associated with QCL parameters {Doppler shift, Doppler spread}) for the rest of the indicated unified TCI states.

- If the network pre-compensates only for average delay impairment, due to the fact that delay spread is more of an environment parameter rather than an inter-TRP calibration error, up to the number of cooperating TRPs can be RRC configured for PDSCH transmission. The QCL assumption of those indicated unified TCI states is with respect to QCL-Type A for one unified TCI state and with respect to QCL-Type A for one specific predefined/preconfigured unified TCI state and with respect to QCL-Type A except for QCL parameters {average delay} for the rest of the indicated unified TCI states.

- If the network pre-compensates only for average delay and Doppler shift impairments, due to the fact that delay spread and Doppler spread are more environment parameters rather than inter-TRP calibration errors, up to the number of cooperating TRPs can be RRC configured for PDSCH transmission. The QCL assumption of those indicated unified TCI states is with respect to QCL-Type A for one unified TCI state, with respect to QCL-Type A for one specific predefined/preconfigured unified TCI state and with respect to QCL-Type A except for QCL parameters {average delay, Doppler shift} for the rest of the indicated unified TCI states.

The second and third operational schemes disclosed herein may require up to the number of cooperating TRPs indicated unified TCI states all with respect to QCL-Type A for DL RS transmission. According to UE capability and based on achieved calibration-assisting information at the network as a result of UE collaboration, the consideration of QCL type and assumption for CJT-based PDCCH and/or PDSCH transmission can be based on one or more of the following conditions:

- If the network pre-compensates both time and frequency synchronization impairments (i.e., fully synchronized PDCCH and/or PDSCH transmissions from different TRPs), only one indicated TCI state with respect to QCL-Type A would be sufficient for PDCCH and/or PDSCH transmissions from different TRPs. If the network pre-compensates only for frequency synchronization impairments, up to the number of cooperating TRPs unified TCI states can be configured for PDCCH and/or PDSCH transmission. The QCL assumption of those indicated unified TCI states is with respect to QCL-Type A for one specific predefined/preconfigured unified TCI state and with respect to QCL-Type A except for QCL parameters {Doppler shift, Doppler spread} for the rest of the indicated unified TCI states. The one specific unified TCI state with respect to QCL-Type A can be determined at the UE based on a predefined rule such as first or last or with a specific ID TCI state, or alternatively can be determined based on semi-static configuration by RRC or dynamic configuration by MAC CE or DCI indication.

- If the network pre-compensates only for time synchronization impairment, up to the number of cooperating TRPs can be configured for PDCCH and/or PDSCH transmission. The QCL assumption of those indicated unified TCI states is with respect to QCL-Type A for one unified TCI state and with respect to QCL-Type B for the rest of the indicated unified TCI states.

UE calibration-assisting information will now be described.

The CJT multi-TRP transmission should have an ideal backhaul with fully synchronized cooperating TRPs both in time and frequency to ensure coherent DL transmission and performance gain. Any delay, phase, and frequency offsets among cooperating TRPs can significantly degrade CJT performance. Due to DL reference timing offsets, different propagation delays, independent local oscillators per TRP, as well as UE mobility, inter-TRP synchronization would be unrealistic and very challenging for the network. Thus, according to an embodiment, the UE may receive explicit/implicit calibration-assisting information and thus be able to pre-compensate synchronization impairments and preserve the performance benefits for CJT-based PDSCH and/or PDCCH transmission(s).

Depending on UE capability, the calibration-assisting information provided by the UE may implicitly or explicitly include DL reference timing propagation channel delay information such as average delay and/or delay spread, frequency offset and Doppler information such as Doppler shift and/or Doppler spread, as well as phase noise information.

Such information can be provided in a per-TRP manner or in a relative manner based on a specific predefined rule (e.g., with respect to the first or last or specific ID DL RS and/or TRP) or with respect to a pre-configured (via RRC, MAC CE, or DCI) reference DL RS and/or TRP. Furthermore, the calibration-assisting information provided by the UE can be in the form of standalone reports or as part of the CSI report. One example of the latter can be the introduction of new report quantities or alternatively in the form of an enhanced precoding matrix indicator (PMI) or additional hypothesis PMIs.

Another factor to consider is the design of the DL RS that is expected to be measured at the UE with the purpose of providing inter-TRP calibration assistance information to the network. Although a timing RS (TRS) and/or CSI-RS could be the best candidates, the detailed design and configuration of such DL RS are discussed in detail below.

DL reference timing will now be described.

3GPP Rel. 18 supports CJT based PDSCH transmission as a single DCI based multi-TRP scheme. Such a scenario targets intra-site CJT deployments where fully synchronization of cooperating TRPs is feasible. Under such scenarios, there is no DL timing reference offset among TRPs and only one DL reference timing can be supported.

In realistic CJT deployments such as inter-site and/or inter-TRP scenarios, due to DL timing offsets, one possible design scheme is to support multiple DL reference timings where each DL reference timing is associated with one timing advance group (TAG) and corresponds to one TRP. The base assumption is that the reception timing difference between each two DL reference timings is no larger than a cyclic prefix (CP) length and as an optional UE capability, it can be larger than a CP length. This would, however, require higher UE complexity as additional buffering at the UE would be required to handle two DL timings for a CJT transmission. Since the ideal design for a CJT transmission is to support only one DL reference timing, a UE assisted scheme is proposed where the UE would measure the difference of DL timing and report it back to the gNB. This would aid the network to calibrate the DL reference timing offset.

In addition, inter-TRP and/or inter-site DL reference timing alignment at the network may require a gNB to entirely alter the frame timing that may be very complex due to the possible impact to all other UE system. Such a DL timing offset can be fairly considered to be small and not having much of an effect on frame timing such that other UEs would be able to eventually track such a small frame timing alternation.

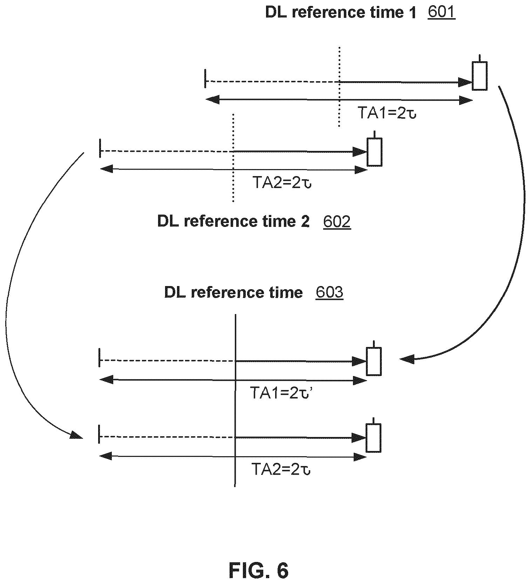

FIG. 6 illustrates a proposed scheme for DL reference time compensation with two cooperative TRPs, according to an embodiment.

Referring to FIG. 6, two different DL timings 601 and 602 corresponding to two TRPs collaborating in a CJT transmission scheme are shown. An ideal design for a CJT transmission is to support only one DL reference timing, however, in practical deployments, differences in the DL timings of collaborating TRPs can occur due to propagation delays or other synchronization impairments. To address this issue, the UE can provide a UE assisted reported of the observed DL timing differences to the network. This report enables the network to adjust or calibrate the DL reference timing offset 603, to ensure that the TRPs' transmissions are synchronized, improving the overall performance of the CJT system.

The DL RS signal to be used for this purpose can be a TRS that can provide an opportunity of high-resolution time tracking measurements. To do so, in a CJT transmission scheme with K TRPs, a network can configure K TRS resource sets where each set represents one TRP. All the TRS resources in a configured resource set may share the same resource element (RE) locations and have the same number of ports. However, TRS resources in each different resource set are either configured to be TRP specific (i.e. orthogonal resource allocation with respect to TRS resources in another resource set) in a simultaneous transmission manner or they are configured to share the same RE locations but transmitted in a non-simultaneous manner. Furthermore, the number of ports can be the similar across TRS resource sets for a symmetric CJT layout or different for an asymmetric CJT layout. Despite other TRS designs, different TRS resource sets can have different QCL-Type A (i.e. associated with QCL parameters {average delay, delay spread, Doppler shift, Doppler spread}) and/or QCL type C (i.e. associated with QCL parameters {average delay, Doppler shift}) and if applicable Type-D source RS. Such K TRS resource sets can be configured inside CSI reporting setting with the introduction of a new RRC parameter representing a DL reference timing offset report and thus the measured value can be reported as a part of a CSI report. Alternatively, such K TRS resource sets can be configured inside a newly introduced reporting setting representing a DL reference timing offset report, and thus the measured value can be reported as a separate standalone report.

Another DL RS candidate for DL reference timing offset reporting is CSI-RS where, in a CJT transmission scheme with K TRPs, a network can configure one CSI-RS resource set with K resources representing K TRPs. The CSI-RS resources in a configured resource set may be TRP specific (i.e. orthogonal resource allocation) and have the same number of ports for a symmetric CJT layout or a different number of ports for an asymmetric CJT layout. Different CSI-RS resources inside the set can have different QCL-Type-A/C and if applicable a Type-D source RS. Such a CSI-RS resource set with K resources can be configured inside a CSI reporting setting with the introduction of a new RRC parameter representing a DL reference timing offset report and thus the measured value can be reported as a part of CSI report. Alternatively, such a CSI-RS resource set can be configured inside a newly introduced reporting setting representing a DL reference timing offset report and thus the measured value can be reported as a separate standalone report. Another alternative is that such a CSI-RS resource set is the same non-zero power (NZP) CSI-RS set configured in a resource setting as a CSI measurement resource (CMR) associated with a 3GPP Rel-18 Type-II CJT codebook. Thus, the DL reference timing offset measurement would be reported as a part of a CSI report.

Another DL RS candidate for DL reference timing offset reporting is a synchronization signal block (SSB) where, in a CJT transmission scheme with K TRPs, a network can configure one SSB resource set with K resource groups each group representing one TRP. One simpler version is one SSB resource set with K resources where each resource in the SSB set represents one TRP (i.e. each group only has one resource). The different SSB groups/resources representing different TRPs are configured with orthogonal allocations to allow a UE to detect and measure the SSBs from each TRP and report the corresponding measurements accordingly for different TRPs. Different SSB resources inside the set can have different QCL-Type-A/C and if applicable Type-D source RS. However, SSB resources may not be suitable to provide a necessary accuracy required for a DL timing offset. Another DL RS candidate for DL reference timing offset reporting is DMRS (e.g. in aforementioned Scheme A). In a CJT transmission scheme with K TRPs, PDCCH DMRS are transmitted in a TRP-specific manner where a UE can measure each channel separately due to orthogonal resource allocation for each DMRS corresponding to one specific cooperating TRP, thereby providing the network an opportunity to pre-compensate a DL reference timing offset for the corresponding PDSCH and all other following DL transmissions. Note that the allocated number of ports for each DMRS can be the similar for a symmetric CJT layout or different for an asymmetric CJT layout. Different DMRSs can have different QCL-Type-A/C and if applicable Type-D source RS. The measured DL reference timing value can be reported as a separate standalone report. Acknowledging the UE buffering implementation concerns for PDCCH DMRS being used as a DL RS for measurement and reporting of DL timing impairment, an alternative approach is to use PDSCH DMRS as DL RS, however in such an approach the network pre-compensation would only be possible for future DL transmissions including any future PDCCH and/or PDSCH transmissions. In case of a wideband precoding configuration, the PDCCH DMRS can be a feasible option with less UE complexity concern.

In the above DL RS frameworks, such DL RS transmissions may require up to a number of cooperating TRPs indicated unified TCI states all with respect to a QCL type that has the timing information such QCL-Type A and/or QCL type C. Furthermore, applicable to the proposed schemes, the UE calibration report can be based on an individual DL reference timing value of each TRP (either in an absolute or differential manner) or based on offset DL reference timing value(s) among TRPs.

Propagation channel delay information will now be described.

In multi-TRP transmission, DL transmissions from different TRPs may experience different line-of-sight (LOS) conditions, resulting in different propagation delays. This may make CJT less practical if accurate channel state information is not available. Furthermore, in realistic CJT deployments such as inter-site and/or inter-TRP scenarios, an ideal transport connection through synchronization may not be feasible. To ensure a constructive composite propagation channel at the UE, a solution relies on UE assistance to measure the difference in timing properties of DL propagation channels from each TRP, and report it back to the gNB.

The DL RS signal to be used for this purpose can be TRS, which can provide the opportunity for high-resolution time tracking measurements. In a CJT transmission scheme with K TRPs, the network can configure K TRS resource sets where each set represents one TRP. All the TRS resources in a configured resource set share the same resource element (RE) locations and have the same number of ports. Furthermore, the number of ports can be similar across TRS resource sets for a symmetric CJT layout or different for an asymmetric CJT layout. Despite other TRS designs, different TRS resource sets can have different QCL-Type A (i.e., associated with QCL parameters {average delay, delay spread, Doppler shift, Doppler spread}) and/or QCL type C (i.e., associated with QCL parameters {average delay, Doppler shift}) and, if applicable, Type-D source RS. Such K TRS resource sets can be configured inside a CSI reporting setting with the introduction of a new RRC parameter representing a DL timing synchronization report, and thus the measured values can be reported as part of the CSI report. Alternatively, such K TRS resource sets can be configured inside a newly introduced reporting setting representing a DL timing synchronization report, and thus the measured values can be reported as a separate standalone report.

Another DL RS candidate for DL timing synchronization reporting is CSI-RS, where in a CJT transmission scheme with K TRPs, the network can configure one CSI-RS resource set with K resources representing K TRPs. The CSI-RS resources in a configured resource set have orthogonal resource allocation (i.e., TRP-specific) and have the same number of ports for a symmetric CJT layout or a different number of ports for an asymmetric CJT layout. Different CSI-RS resources inside the set can have different QCL-Type-A/C and, if applicable, Type-D source RS. Such a CSI-RS resource set with K resources can be configured inside a CSI reporting setting with the introduction of a new RRC parameter representing DL timing synchronization report, and thus the measured values can be reported as part of the CSI report. Alternatively, such a CSI-RS resource set can be configured inside a newly introduced reporting setting representing a DL timing synchronization report, and thus the measured values can be reported as a separate standalone report. Another alternative is that such a CSI-RS resource set is the same NZP CSI-RS set configured in the resource setting as a CMR associated with Rel-18 Type-II CJT codebook. Thus, the DL timing synchronization measurement would be implicitly included in PMI reporting or explicitly reported as a new parameter included in the CSI report.

Another DL RS candidate for DL timing synchronization reporting is an SSB, where in a CJT transmission scheme with K TRPs, the network can configure one SSB resource set with K resources representing K TRPs. The SSB resources in a configured resource set are TRP-specific and thus orthogonal. Different SSB resources inside the set can have different QCL-Type-A/C and, if applicable, Type-D source RS. However, SSB resources may not be suitable to provide the accuracy required for DL timing synchronization.

Another DL RS candidate for DL timing synchronization reporting is DMRS (e.g., in the aforementioned first operational scheme). In a CJT transmission scheme with K TRPs, PDCCH DMRS are transmitted in a TRP-specific manner, allowing the UE to measure each channel separately due to orthogonal resource allocation for each DMRS corresponding to one specific cooperating TRP. The allocated number of ports for each DMRS can be similar for a symmetric CJT layout or different for an asymmetric CJT layout. Different DMRS can have different QCL-Type-A/C and, if applicable, Type-D source RS. The measured DL timing synchronization value can be reported as a separate standalone report.

In the above DL RS frameworks, such DL RS transmissions would require up to the number of cooperating TRPs indicated with unified TCI states, all with respect to a QCL type that has the timing information, such as QCL-Type A and/or QCL type C.

The metric and/or parameter(s) included in UE calibration report as representative of DL propagation timing synchronization may include propagation delay (i.e. $\tau_{min}$), average delay, delay spread of DL channels (i.e. $\tau_{max}$ - $\tau_{min}$), a mean delay spread (i.e. $\tau_{mean} = \dfrac{\sum(\tau_k - \tau_{min})P_k}{\sum P_k}$ where $P_k$ is power of path $k$ in a channel power delay profile), root mean square (rms) delay spread (i.e. $\tau_{rms} = \sqrt{\dfrac{\sum((\tau_k - \tau_{min}) - \tau_{mean})^2 P_k}{\sum P_k}}$ ), propagation delays of $M \geq 1$ identified peaks in a measured/estimated time domain channel (i.e. $\tau_1, .., \tau_M$) and/or frequency domain channel autocorrelation (i.e. $R_H(l)$ or normalized version $\left|\dfrac{R_H(l)}{R_H(0)}\right|$ ). In the above proposed average delay, mean delay spread or rms delay spread metrics, the summation operations can be applied over $K$ identified/chosen paths in a channel power delay profile where $1 \leq K \leq N$, $N$ is a total number of paths and the selection of $K$ out of $N$ is based on criteria such as highest power.

The frequency domain autocorrelation metric as mentioned above is a metric that measures the correlation of channel in a frequency domain and can be a dual representative of delay spread of the channel. Delay spread implies a frequency selective fading channel. If the channel from different TRPs to a UE has a different delay spread then the composite channel becomes highly frequency selective. In order to deal with high frequency selectivity, one solution may be to make pilots denser in the frequency domain. However, such a solution drastically increases the resource overhead, as well as UE complexity and power consumption. Another alternative is to extract delay spread information to calculate frequency domain autocorrelation as its dual representative according to Equation (1):

$$R_H(l) = E\{H(k)H(k-l)^H\} = \sum_{k=0}^{N-1} H(k)H(k-l)^H$$

$$\dots \text{Equation (1)}$$

where $H^{(k)}$ is a frequency domain channel at subcarrier $k$. There are several ways to calculate the $R_H(0)$ for the normalized frequency domain channel autocorrelation metric, some of examples are shown below in Equation (2) and Equation (3): arithmetic average:

$$R_H(0) \approx \frac{1}{2} \cdot \sum_{k=0}^{N-1} \{H(k)H(k)^H + H(k-l)H(k-l)^H\}$$

$$\dots \text{Equation (2)}$$

geometric average:

$$R_H(0) \approx \sqrt{\sum_k |H(k)|^2} \sqrt{\sum_k |H(k-l)|^2}$$

$$\ldots \text{ Equation (3)}$$

Furthermore, some methods may consider suppressing noise bias as well.

Applicable to one or more of the above schemes, the UE calibration report can be based on an individual DL timing synchronization value of each TRP (either in an absolute or differential manner) or based on offset timing synchronization value(s) among TRPs. Some examples of such in CJT with two cooperating TRPs are propagation delay offset (i.e. $\tau_{1,min} - \tau_{2,min}$}), average delay offset, delay spread offset (i.e. $|(\tau_{1,max} - \tau_{1,min}) - (\tau_{2,max} - \tau_{2,min})|$), mean delay spread offset (i.e. $|(\tau_{1,mean} - \tau_{2,mean}|$), rms delay spread offset (i.e. $|\tau_{1,rms} - \tau_{2,rms}|$), propagation delay offsets of $M \geq 1$ identified peaks in measured/estimated time domain channel (i.e. $|\tau_{1,1} - \tau_{2,1}|,.., |\tau_{1,M} - \tau_{2,M}|$ ), frequency domain channel autocorrelation offset (i.e. $|R_{1,H}(l) - R_{2,H}(l)|$, and/or normalized version $\left| \left|\frac{R_{1,H}(l)}{R_{1,H}(0)}\right| - \left|\frac{R_{2,H}(l)}{R_{2,H}(0)}\right| \right|$ ).

In addition, with multiple timing advanced (TA) enhancements, after calibration of DL reference timing among cooperating TRPs, the gNB would have the knowledge of TA per cooperative TRP transmission. According to some embodiments, this TA information can be used at a gNB to calibrate timing properties of DL propagation channels. However, DL timing synchronization metrics that can be reported by UE may at least include average delay and/or delay spread of DL channels.

Frequency offset and Doppler information will now be described.

In inter-site and/or inter-TRP CJT deployments, each TRP may use independent local oscillators, and also due to the fact that UE mobility relative to each TRP is different from the other, there could be differences in the frequency offset for DL transmissions from each TRP. To illustrate, a UE moving away from one TRP and towards the other TRP experiences a negative Doppler offset from one TRP and a positive Doppler offset towards the other TRP. To address this, the UE can assist the gNB on carrier synchronization through measuring and reporting the difference in DL frequency offset.

The DL RS signal to be used for this purpose can be TRS, which can provide the opportunity for high-resolution frequency tracking measurements. In a CJT transmission scheme with K TRPs, the network can configure K TRS resource sets where each set represents one TRP. All the TRS resources in a configured resource set share the same RE locations and have the same number of ports. Furthermore, the number of ports can be similar across TRS resource sets for a symmetric CJT layout or different for an asymmetric CJT layout. Different TRS resource sets can have a different QCL source RS. Such K TRS resource sets can be configured inside a CSI reporting setting with the introduction of a new RRC parameter representing a DL frequency offset report, and thus the measured values can be reported as part of the CSI report. Additionally or alternatively, such K TRS resource sets can be configured inside a newly introduced reporting setting representing a DL frequency offset report, and thus the measured values can be reported as a separate standalone report. Up to the number of cooperating TRPs indicated unified TCI states are required to include QCL types that have the frequency offset properties such as QCL-Type A, QCL type B (i.e., associated with QCL parameters {Doppler shift, Doppler spread}) and/or QCL type C.

Another DL RS candidate for DL timing synchronization reporting is DMRS (e.g., in the aforementioned first operational scheme). In a CJT transmission scheme with K TRPs, PDCCH DMRS are transmitted in a TRP-specific manner, allowing the UE to estimate each channel separately due to orthogonal resource allocation for each DMRS corresponding to one specific cooperating TRP. Note that the allocated number of ports for each DMRS can be similar for a symmetric CJT layout or different for an asymmetric CJT layout. Different DMRS can have different QCL-Type-A/B and, if applicable, Type-D source RS. The measured DL timing synchronization value can be reported as a separate standalone report.

The metric and/or parameter(s) that are included in a UE calibration report as representative of DL frequency synchronization may include Doppler shift, Doppler spread (i.e. $f_{D,max} - f_{D,min}$), a mean Doppler spread (i.e.

$$f_{D,mean} = \frac{\sum(f_{D,k} - f_{D,min})P_k}{\sum P_k})$$
, an rms Doppler spread (i.e. $f_{D,rms} = \sqrt{\frac{\sum((f_{D,k} - f_{D,min}) - f_{D,mean})^2 P_k}{\sum P_k}}$ )),

Doppler shifts of $M \geq 1$ identified peaks in a measured/estimated channel (i.e. $f_{D,1},..,f_{D,m}$), and/or a channel autocorrelation similar to 3GPP Rel. 18 time-domain channel property (TDCP) reporting (i.e. $c(t,\tau)$ or normalized version $\left|\frac{c(t,\tau)}{c(t,0)}\right|$ ). In the aforementioned mean and rms Doppler spread metrics, any summation operation can be applied over K identified/chosen paths in a channel power delay profile where $1 \leq K \leq N$, N is a total number of paths, and the selection of K out of N is based on some criteria such as highest power. The channel autocorrelation metric $c(t,\tau)$ represents a time domain correlation of a channel and is a dual representative of Doppler properties of the channel according to Equation (4):

$$c(t, \tau) = \sum_{n=0}^{N-1} h_k(t+\tau) \cdot h_k^*(t)$$

$$\dots \text{Equation (4)}$$

where $h_k(t)$ is a time domain channel of subcarrier $k$ at time t. For a normalized autocorrelation metric, the $c(t, 0)$ can be calculated as below according to Equation (5) and Equation (6): arithmetic average:

$$c(t, 0) \approx \frac{1}{2} \cdot \sum_{n=0}^{N-1} \left( h_n(t) \cdot h_n^*(t) + h_n(t+\tau) \cdot h_n^*(t+\tau) \right)$$

$$\dots \text{Equation (5)}$$

geometric average:

$$c(t, 0) \approx \sqrt{\sum_n |h_n(t+\tau)|^2} \sqrt{\sum_n |h_n(t)|^2}$$

$$\dots \text{Equation (6)}$$

Furthermore, some methods may consider suppressing noise bias as well.

According to one or more embodiments, the UE calibration report can be based on an individual DL frequency synchronization value of each TRP (either in an absolute or differential manner) or based on offset frequency synchronization value(s) among TRPs. Some examples of this in CJT, with two cooperating TRPs, are Doppler shift offset, Doppler spread offset (i.e. $|(f_{D1,max}-f_{D1,min})-(f_{D2,max}-f_{D2,min})|$), mean Doppler spread offset (i.e. $|f_{D1,mean}-f_{D2,mean}|$), rms Doppler spread offset (i.e. $|f_{D1,rms}-f_{D2,rms}|$), Doppler shifts offsets of $M \geq 1$ identified peaks in a measured/estimated time domain channel (i.e. $|f_{D1,1}-f_{D2,1}|,...,|f_{D1,M}-f_{D2,M}|$), and/or channel autocorrelation offset (i.e. $|c_1(t,\tau)-c_2(t,\tau)|$ or normalized version $\left| \left| \frac{c_1(t,\tau)}{c_1(t,0)} \right| - \left| \frac{c_2(t,\tau)}{c_2(t,0)} \right| \right|$).

Phase noise information will now be described.

In realistic CJT deployments such as inter-site and/or inter-TRP scenarios, due to the fact that each TRP uses independent local oscillators, a CJT can be viewed as less practical in terms of a constructively added composite propagation channel. The network can calibrate different TRPs' local oscillators and achieve DL carrier synchronization among multiple TRPs with UE assistance, where the UE measures such DL phase noise differences and reports them back to the gNB.

The DL RS signal to be used for this purpose can be DL phase-tracking (PTRS), which can provide the opportunity for high-resolution phase noise tracking measurements at the UE. In a CJT transmission scheme with K TRPs, the network can configure K PTRS resources where each represents one TRP. The PTRS resources need to be TRP-specific and hence orthogonal to each other, transmitted in a simultaneous manner since phase noise has dynamic stochastic characteristics. Furthermore, the number of ports can be similar across PTRS resources for a symmetric CJT layout or different for an asymmetric CJT layout. Different PTRS resources can have different QCL source RS(s).

Such K PTRS resources can be configured inside a newly introduced calibration-assisting reporting setting representing a DL phase noise report, and thus the measured value can be reported as a separate standalone report. Alternatively, such K PTRS resources can be configured with the higher layer parameter phaseTrackingRS inside a PDSCH DMRS configuration that is scheduled by DCI formats 1_0/1_1/1_2. A new DCI field can be introduced for the scheduling DCI to trigger PTRS measurement for the calibration-assisting report.

The metric and/or parameter(s) included in the UE calibration report representative of DL phase noise synchronization may include phase noise, mean phase noise, variance of phase noise, phase noises at $M \geq 1$ identified frequency offsets from carrier frequency, and phase noise autocorrelation in the time domain. The UE calibration report can be based on the individual phase noise value of each TRP (either in absolute or differential manner) or based on offset phase noise value(s) among TRPs. The UE may need to use the same local oscillator for reception of different PTRS resources to help with phase noise calibration at the transmitter.

As mentioned above, due to the dynamic stochastic characteristic of phase noise depending on the operating carrier frequency and bandwidth that define the phase noise level, any phase noise measurement and reporting by the UE may be aged and outdated when received by the network. To address this problem, the content of the UE-assisted report may include metrics representing the stochastic characteristic of phase noise offset among TRPs and/or phase noise per TRP to aid the gNB in predicting the phase noise variation for the current or future times. Some example metrics for this purpose can be mean phase noise, variance of phase noise, phase noises at $M \geq 1$ identified frequency offsets from carrier frequency, and phase noise autocorrelation in the time domain. This approach relies on gNB-side prediction of phase noise based on UE-assisted calibration reporting of a phase noise measurement. This prediction can be applied with good accuracy for common phase noise error (CPE) that is common to all subcarriers and represents the low-pass filtered version of the phase noise. Another approach is that prediction of phase noise (i.e., at least CPE) is done at the UE side and the UE-assisted calibration reporting includes the current or future phase noise offset among TRPs and/or phase noise per TRP.

For such prediction reporting, a time domain basis and/or Doppler domain basis should be defined. For example, the same Doppler/time domain basis configured for CSI prediction reporting for high/medium velocity UEs may be used. Additionally or alternatively, identity basis, orthogonal discrete Fourier transform (DFT) waveform, oversampled DFT waveform, discrete cosine transform (DCT), or Slepian waveform can be used as the time/Doppler domain basis of phase noise prediction in the UE-assisted calibration report. With the prediction, the reporting validity window can be assumed as $[l, l + W_{CJT} - 1]$, where $W_{CJT}$ is the length of a reporting validity window that determines how far in the future phase noise is predicted and $l$ is a start slot of the report validity window with candidate values of either slot (n+6), where n is a reporting slot and $\delta \geq 0$ or the slot of a DL PTRS location. The values of $\delta$, $W_{CJT}$ and a number of selected time/Doppler domain basis vectors can be RRC-configured or reported by the UE based on a UE capability. Such reporting would contain a selected time/Doppler domain basis, non-zero coefficients as well as a bitmap to indicate the location of those non-zero coefficients.

UL RS assisting calibration for TDD will now be described.

The 5G TDD system framework is designed based on a channel reciprocity assumption. Under such an assumption, the UE can implicitly assist the network for CJT inter-site and/or inter-TRP calibration by transmitting some UL RS. A factor to consider is the design of the UL RSs that are expected to be transmitted by the UE with the purpose of providing inter-TRP calibration assistance information to the network.

For DL reference timing, propagation channel delay information, a frequency offset and Doppler information, an SRS can provide an opportunity of high-resolution time and frequency tracking measurements at the gNB. To do so, the gNB can configure K SRS resources in one set where each resource is configured for transmission toward one cooperating TRP(s). The SRS resources may share the same RE locations and may be transmitted in a non-simultaneous manner, or they may be TRP specific with orthogonal resource allocation and transmitted in a simultaneous manner. All SRS resources may have the same number of ports but may have different QCL assumptions as well as different power control parameters configurations. Up to a number of cooperating TRPs indicated unified TCI states may be required all with respect to QCL-Type-A/C for the purpose of time synchronization and QCL-Type-A/B/C for the purpose of frequency synchronization and additionally Type-D source RS, if applicable.

Another UL RS candidate is UL DMRS. In a CJT transmission scheme with K TRPs, PDCCH DMRS are transmitted in TRP-specific manner where a UE can estimate each channel separately due to orthogonal resource allocation for each DMRS corresponding to one specific cooperating TRP. The allocated number of ports for each DMRS can be the same as for a symmetric CJT layout or different for an asymmetric CJT layout. Different DMRS can have a different QCL-assumption, as explained earlier, for an SRS as UL RS candidate.

For phase noise information, UL PTRS can provide opportunity of high-resolution phase noise tracking measurements. To do so, a network can configure K PTRS resources for transmission towards K cooperating TRP in CJT scheme. The UL PTRS resources are either TRP specific with orthogonal resource allocation that are transmitted in a simultaneous manner or they share the same RE locations and are transmitted in a non-simultaneous manner. All PTRS resources can share the same number of ports with different QCL source RS(s) as well as different power control configurations. A UE would use the same local oscillator for transmission of different PTRS resources to help with phase noise calibration at the network.

DL/UL UE-assisted calibration for TDD will now be described.

As mentioned above, the 5G TDD system framework is designed based on a channel reciprocity assumption. However, such an assumption may not always be realistic due to different RF architectures and impairment for DL and UL transmission paths. This would restrict applicability of the proposed third operational scheme or any other schemes where UE implicitly assists a network for calibration by UL RS transmission.

The DL/UL calibration at a gNB can be achieved via self-calibration approaches at the site without any auxiliary UE. Although such a calibration approach works well and is widely used for intra-site and intra-TRP antenna calibration, it can be impractical for inter-site and/or inter-TRP antenna calibration for a CJT scheme.

To calibrate inter-TRP reciprocity error at a gNB, one possible solution is to rely on both a UL RS transmission (to provide calibration-assisting information for UL) as well as UE collaboration (to provide calibration-assisting information for DL). Thus, the fourth and fifth operational schemes are described below.

The fourth operational scheme may include a DL RS, DM-RS, and PDCCH being transmitted in a TRP-specific manner. The UE measures and shares DL calibration assistance information according to UE capability. The UE explicitly shares UL calibration assistance information via UL RS transmission. The network pre-compensates inter-TRP reciprocity error, time and/or frequency synchronization impairment for PDSCH transmission.

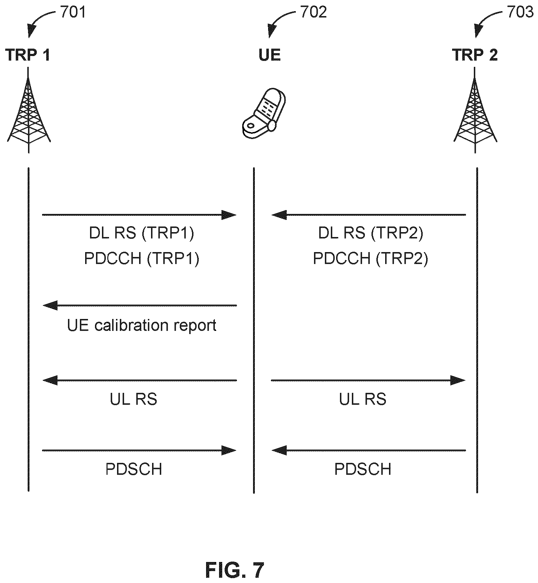

FIG. 7 illustrates an example of a fourth operational scheme with two cooperative TRPs in CJT, according to an embodiment.

Referring to FIG. 7, the process of UE-assisted calibration for CJT involving two TRPs, TRP 1 701 and TRP 2 703, in communication with a UE 702 in the context of the fourth operational scheme is illustrated. In this figure, the sequence of operations begins with each TRP 701 and 703 transmitting a DL RS and a PDCCH to the UE 702. The UE 702 sends a UE calibration report (e.g., DL calibration assistance information) to TRP 1 701. The UE 702 explicitly transmits UL RS to TRP 701 and TRP 703. Then, the network pre-compensates inter-TRP parameters for PDSCH transmission.

The fifth operational scheme may include a DL RS being transmitted in a TRP-specific manner. The UE measures and shares DL calibration assistance information according to UE capability. The UE explicitly shares UL calibration assistance information via UL RS transmission. The network pre-compensates inter-TRP reciprocity error, time and/or frequency synchronization impairment for PDCCH/PDSCH transmission.

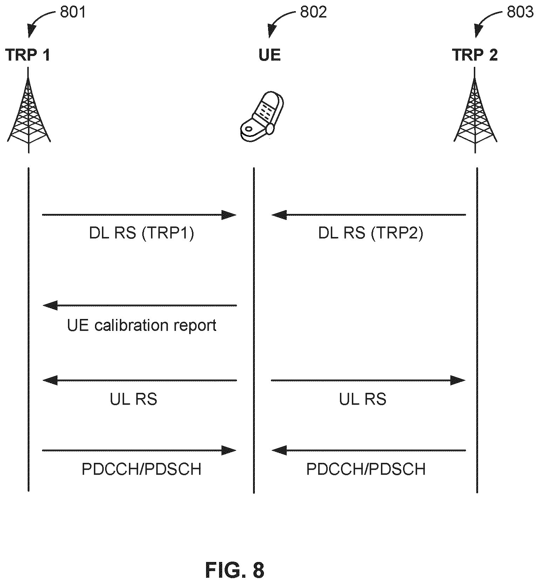

FIG. 8 illustrates an example of a fifth operational scheme with two cooperative TRPs in CJT, according to an embodiment.

Referring to FIG. 8, the process of UE-assisted calibration for CJT involving two TRPs, TRP 1 801 and TRP 2 803, in communication with a UE 802 in the context of the fifth operational scheme is illustrated. In this figure, the sequence of operations begins with each TRP 801 and 803 transmitting a DL RS to the UE 802. The UE 802 sends a UE calibration report (e.g., DL calibration assistance information) to TRP 1 801. The UE 802 explicitly transmits UL RS to TRP 801 and TRP 803. Then, the network pre-compensates inter-TRP parameters for PDCCH/PDSCH transmission.

For both the fourth and fifth operational schemes, the order of DL RS, UE reporting and UL RS transmission can be changed, or transmission of any of the signals may occur simultaneously or at similar times. Furthermore, any combination of above operational schemes is yet possible where DL RS and/or UL RS can respectively be PDCCH DMRS and/or PUCCH DMRS.

Calibration-assisting report setting, configuration and triggering will now be described.

An RRC configuration can be introduced as measurement configuration for a calibration-assisting report that configures a list of all DL RSs belonging to the serving cell that can be measured for derivation of calibration-assisting information at a UE (e.g. a similar concept as CSI measurement configuration (CSI-MeasConfig)). This information element (IE) can also include trigger states for dynamically selecting one or more aperiodic and semi-persistent reporting configurations and/or triggering one or more aperiodic DL resource sets for measurement.

Furthermore, another RRC configuration can be introduced as a reporting setting to configure a periodic or semi-persistent report sent on PUCCH on the cell or to configure a semi-persistent or aperiodic report sent on PUSCH triggered by DCI received on the cell (e.g. a similar concept as CSI-ReportConfig). This IE can also contain at least one of a report time domain behavior and configuration, a frequency domain configuration, report quantities, and/or time domain measurement restriction information. Similar to CSI reporting, applicable to all UE calibration-assisting reporting metrics, a semi-static configuration can be defined to restrict time domain measurement and averaging at a UE (e.g. a similar to the concept as a time-based restriction on when the UE is allowed to perform channel measurements (timeRestriction-ForChannelMeasurements) or a time-based restriction on when the UE can perform interreference measurements (timeRestrictionForInterferenceMeasurements)).

The UE calibration-assisting reports can be periodic/semi-persistent or aperiodic. Periodic reports may be semi-statically configured based on measurements of configured periodic resources, semi-persistent reports can be triggered by a MAC CE or DCI (e.g. DCI format 0_1 or DCI format 0_2) that activates/deactivates a semi-persistent CSI trigger state and are based on measurements of configured periodic or semi-persistent resources, and aperiodic reports can be triggered by DCI format 0_1 or DCI format 0_2 and are based on measurements of configured periodic or semi-persistent or aperiodic resources.

For aperiodic and semi-persistent reporting, thus, a new DCI field can be introduced in the scheduling DCI to dynamically trigger calibration-assisting reporting on PUSCH. Furthermore, for semi-persistent reporting, a new MAC CE activation command can be introduced to dynamically trigger a calibration-assisting reporting on PUCCH. Periodic calibration-assisting reporting may be configured semi-statically through RRC, and the reporting may occur on PUCCH.

The calibration-assisting reporting can be associated with a priority value similarly to CSI reporting where the one with a lower value has the transmission priority. Accordingly, according to an embodiment, no new priority rule is defined and hence the priority of the calibration-assisting reporting is determined based on a CSI priority rule with $k = 1$ similar to the case of not carrying layer 1 (L1)-RS received power (RSRP) or L1-signal to interference plus noise ratio (SINR). That is, the priority value is defined by Equation (7):

$$Pri_{CSI}(y, k, c, s) = 2N_{cells}M_s y + N_{cells}M_s k + M_s c + s$$

$$\dots \text{Equation (7)}$$

where $c$ is the serving cell index, $N_{cells}$ is the maximum number of serving cells (e.g. the value of higher layer parameter maxNrofServingCells), s is the identification (ID) of a calibration-assisting report configuration, $M_s$ is the maximum number of calibration-assisting report configurations, k indicates priority of reports carrying L1-RSRP or L1-SINR for which the calibration-assisting reporting is considered to always be $k = 1$, and y indicates a priority of reporting based on a time characteristic of a report, for which $y = 0$ is for aperiodic reporting, $y = 1$ is for semi-persistent reporting on PUSCH, $y = 2$ is for semi-persistent reporting on PUCCH, and $y = 3$ is for periodic reporting on PUCCH.

According to an embodiment, a new priority rule $Pri_{CJT}$ is defined specifically for UE-assisted calibration reporting while the priority of UE-assisted calibration reporting compared to CSI reporting can be semi-statically configured, dynamically indicated and/or determined based on a pre-determined rule. An example of a pre-determined rule is that UE-assisted calibration reporting always has a lower priority compared to CSI reporting. One example of $Pri_{CJT}$ is provided as Equation (8):

$$Pri_{CJT}(y, c, s) = 2N_{cells}M_s y + M_s c + s,$$

$$\dots \text{Equation (8)}$$

where c is the serving cell index, $N_{cells}$ is the maximum number of serving cells, s is the ID of a calibration-assisting report configuration, $M_s$ is the maximum number of calibration-assisting report configurations, and y indicates a priority of reporting based on a time characteristic of a calibration-assisting report, for which $y = 0$ is for aperiodic reporting, $y = 1$ is for semi-persistent reporting on PUSCH, $y = 2$ is for semi-persistent reporting on PUCCH, and $y = 3$ is for periodic reporting on PUCCH.

Regarding the timeline requirement for a valid report by the UE, for reporting based on periodic/semi-periodic (P/SP) DL RSs, non-causal reporting can be supported where the P/SP DL RS for the measurements would occur before receiving the DCI triggering the reporting. For aperiodic reporting based on access point (AP) DL RSs, when the timeline of $Z_{ref}$ is not satisfied (where $Z_{ref}$ is defined as the minimum gap between the last symbol of the PDCCH triggering the aperiodic reporting and the first symbol of the PUSCH carrying the report), a UE may ignore the scheduling DCI if no hybrid automatic repeat request (HARQ)-acknowledgement (ACK) or transport block is multiplexed on the PUSCH. When the timeline of $Z'_{ref}$ is not satisfied (where $Z'_{ref}$ is defined as the minimum gap between the last symbol carrying an aperiodic DL RS associated with the triggered report), a UE may ignore the scheduling DCI if the number of triggered reports is one and no HARQ-ACK or transport block is multiplexed on the PUSCH, otherwise a UE may not be required to update the report for the $n^{th}$ triggered CSI report.

Furthermore, regarding the overhead of the calibration-assisting reporting based on the metrics included in the report, amplitude and phase quantization may be defined. Such quantization can be in a differential manner for the amplitude relative to a reference amplitude while a separate indicator would be needed to determine the location of the reference amplitude. For some reporting metrics/parameters, quantized amplitude reporting alone may suffice, while some others may also need quantized phase reporting. The granularity of phase and amplitude quantization can be the same or separately defined for each reporting quantity.

Similar to CPU concept in CSI reporting, a UE can indicate its capability of supporting multiple simultaneous calculations corresponding to multiple calibration-assisting reporting through processing unit occupation in a component carrier as well as across all component carriers. A UE is not expected to be configured with a number of reporting settings larger than its reported processing unit capability. This can be configured through the signaling of $N_{CPU}$ shared between CSI reporting and calibration-assisting reporting, or alternatively as a new capability that can be defined specifically for processing unit occupation of the calibration-assisting reporting.

The number of processing units ($O_{PU}$) occupied by a configured DL RS for a calibration-assisting measurement can be defined as a function of a number of DL RSs according to Equation (9):

$$O_{PU} = Y.K$$

$$\dots \text{Equation (9)}$$

where K is number of DL RS resources and Y is defined based on UE capabilities and is determined by the UE.

In any slot, the UE is not expected to have more active DL RS resources and/or ports in active bandwidth parts (BWPs) than reported as a capability. Any DL RS resource may be active for a duration of time that can be defined as, for aperiodic DL RS, starting from the end of the PDCCH containing the request and ending at the end of the scheduled PUSCH containing the report associated with that aperiodic DL RS. For semi-persistent DL RS, starting from the end of when the activation command is applied and ending at the end of when the deactivation command is applied. For periodic DL RS, starting when the periodic DL RS is configured by higher layer signaling and ending when the periodic DL RS configuration is released.

If a DL RS resource is referred to N times by one or more calibration-assisting reporting settings, the DL RS resource and the ports within the DL RS are counted N times.

Multi-TRP transmission schemes, including single frequency network (SFN), CJT, and NCJT (e.g. space division multiplexing (SDM), frequency division multiplexing (FDM) and time division multiplexing (TDM)) schemes, are beneficial to provide either high reliability/coverage (e.g., for cell edge or high-speed UEs) or high throughput (e.g., for cell center or low-speed UEs). Switching between different multi-TRP transmission schemes may be performed semi-statistically through an RRC configuration. Support of dynamic switching between different multi-TRP transmission schemes is beneficial to the network. Such dynamic switching between schemes can be made feasible via DCI or via a MAC CE command. For the DCI solution, a TCI field and/or a TCI selection field in the unified TCI framework can be used for implicit switching between single TRP scheme and CJT. Alternatively, a new explicit field can be introduced for indicating switching between different schemes where each scheme has a defined codepoint. The existence of such a DCI field may be RRC configured per BWP based on a UE capability. Another solution with reduced overhead can be that some unused DCI bit fields (e.g., a frequency domain resource assignment field, a modulation and coding scheme field, and/or antenna ports field in a non-scheduling DCI with UL-SCH indicator value of "0") can be repurposed to explicitly indicate codepoints of different schemes. For the MAC CE solution, a new explicit field can be introduced in the TCI state activation MAC CE command for indicating the multi-TRP scheme where each scheme has a defined codepoint.

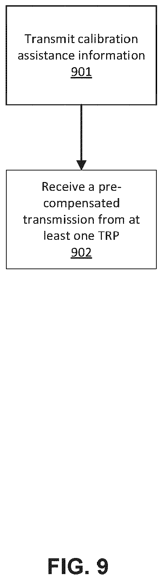

FIG. 9 is a flowchart of a method performed by a UE for assisting inter-TRP calibration in a CJT system, according to an embodiment.

The method illustrated in FIG. 9 may be performed by a UE or any other similar electronic device capable of wireless communication within a network. Additionally, one or more of the steps described in the method may be executed by a processor based on instructions stored in a computer-readable storage medium, such as a memory device or storage module integrated within the UE. The processor, when executing these instructions, controls various hardware components within the UE, such as the communication module and the antenna module, to enable the transmission and reception of signals within a CJT system.

Furthermore, the execution of one or more of these steps may lead to improvements in the hardware operations of the UE, such as more efficient use of PUs during calibration-assisting reporting or enhanced management of DL RSs for synchronization across multiple TRPs. These improvements extend beyond the UE itself, positively impacting the overall communication capabilities of the wireless network by facilitating more accurate and efficient signal transmission. For example, by improving the synchronization between TRPs based on UE-assisted calibration, the network can reduce signal interference and enhance data throughput, leading to better system performance. The method, thus, contributes to optimizing both the hardware operations of the UE and the larger wireless communication system in which it operates.

Referring to FIG. 9, in step 901, calibration assistance information is transmitted. The calibration assistance information may be transmitted by a UE to at least one TRP included in a plurality of TRPs. As mentioned above, calibration assistance information may include various types of parameters and may be transmitted by the UE as or with an uplink signal. The calibration assistance information may help the TRP coordinate its signaling to the UE among the plurality of TRPs.

In step 902, a pre-compensated transmission is received from at least one TRP. The pre-compensated transmission may be received by the UE and the transmission may be pre-compensated for at least one synchronization impairment (e.g., in phase, frequency, or timing offset) between a plurality of TRPs based on the calibration assistance information.

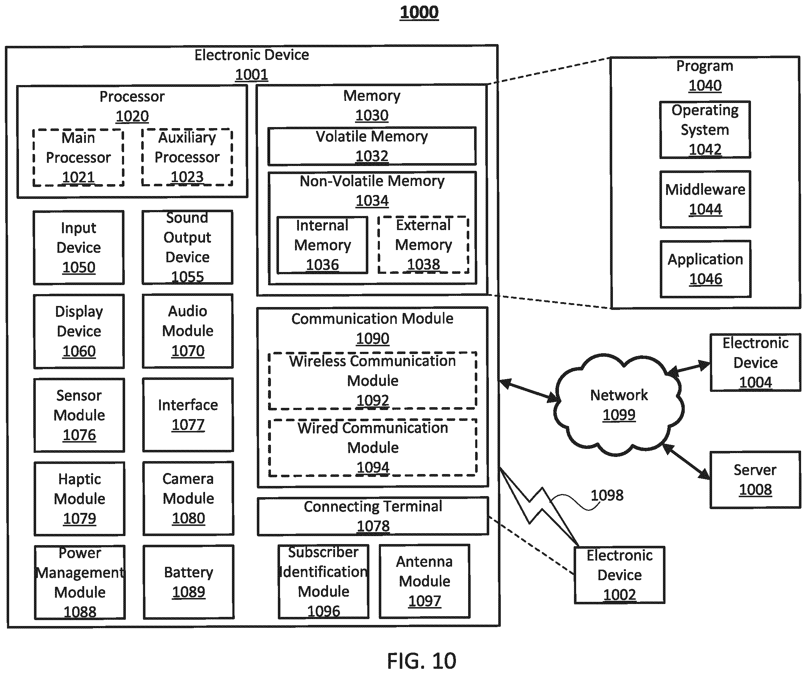

FIG. 10 is a block diagram of an electronic device in a network environment, according to an embodiment.

Referring to FIG. 10, the electronic device 1000 in the network environment provides a structure for implementing the UE-assisted calibration method described in this application. The device 1000 can communicate with multiple TRPs or servers via various networks, enabling it to receive and process DL RS(s) or transmit UL RS(s) for calibration assistance. The processor 1020 and memory 1030 may allow the device 1000 to store and execute instructions for measuring a specific DL RS, reporting calibration-assisting information, and pre-compensating for synchronization impairments across multiple TRPs. The communication module 1090 and antenna module 1097 may facilitate the transmission and reception of signals, supporting the CJT operations described in the claims.

The electronic device 1001 in the network environment 1000 may communicate with an electronic device 1002 via a first network 1098 (e.g., a short-range wireless communication network), or an electronic device 1004 or a server 1008 via a second network 1099 (e.g., a long-range wireless communication network). The electronic device 1001 may communicate with the electronic device 1004 via the server 1008. The electronic device 1001 may include a processor 1020, a memory 1030, an input device 1050, a sound output device 1055, a display device 1060, an audio module 1070, a sensor module 1076, an interface 1077, a haptic module 1079, a camera module 1080, a power management module 1088, a battery 1089, a communication module 1090, a subscriber identification module (SIM) card 1096, or an antenna module 1097. In one embodiment, at least one (e.g., the display device 1060 or the camera module 1080) of the components may be omitted from the electronic device 1001, or one or more other components may be added to the electronic device 1001. Some of the components may be implemented as a single integrated circuit (IC). For example, the sensor module 1076 (e.g., a fingerprint sensor, an iris sensor, or an illuminance sensor) may be embedded in the display device 1060 (e.g., a display).

The processor 1020 may execute software (e.g., a program 1040) to control at least one other component (e.g., a hardware or a software component) of the electronic device 1001 coupled with the processor 1020 and may perform various data processing or computations.

As at least part of the data processing or computations, the processor 1020 may load a command or data received from another component (e.g., the sensor module 1076 or the communication module 1090) in volatile memory 1032, process the command or the data stored in the volatile memory 1032, and store resulting data in non-volatile memory 1034. The processor 1020 may include a main processor 1021 (e.g., a central processing unit (CPU) or an application processor (AP)), and an auxiliary processor 1023 (e.g., a graphics processing unit (GPU), an image signal processor (ISP), a sensor hub processor, or a communication processor (CP)) that is operable independently from, or in conjunction with, the main processor 1021. Additionally or alternatively, the auxiliary processor 1023 may be adapted to consume less power than the main processor 1021, or execute a particular function. The auxiliary processor 1023 may be implemented as being separate from, or a part of, the main processor 1021.

The auxiliary processor 1023 may control at least some of the functions or states related to at least one component (e.g., the display device 1060, the sensor module 1076, or the communication module 1090) among the components of the electronic device 1001, instead of the main processor 1021 while the main processor 1021 is in an inactive (e.g., sleep) state, or together with the main processor 1021 while the main processor 1021 is in an active state (e.g., executing an application). The auxiliary processor 1023 (e.g., an image signal processor or a communication processor) may be implemented as part of another component (e.g., the camera module 1080 or the communication module 1090) functionally related to the auxiliary processor 1023.

The memory 1030 may store various data used by at least one component (e.g., the processor 1020 or the sensor module 1076) of the electronic device 1001. The various data may include, for example, software (e.g., the program 1040) and input data or output data for a command related thereto. The memory 1030 may include the volatile memory 1032 or the non-volatile memory 1034. Non-volatile memory 1034 may include internal memory 1036 and/or external memory 1038.

The program 1040 may be stored in the memory 1030 as software, and may include, for example, an operating system (OS) 1042, middleware 1044, or an application 1046.

The input device 1050 may receive a command or data to be used by another component (e.g., the processor 1020) of the electronic device 1001, from the outside (e.g., a user) of the electronic device 1001. The input device 1050 may include, for example, a microphone, a mouse, or a keyboard.

The sound output device 1055 may output sound signals to the outside of the electronic device 1001. The sound output device 1055 may include, for example, a speaker or a receiver. The speaker may be used for general purposes, such as playing multimedia or recording, and the receiver may be used for receiving an incoming call. The receiver may be implemented as being separate from, or a part of, the speaker.

The display device 1060 may visually provide information to the outside (e.g., a user) of the electronic device 1001. The display device 1060 may include, for example, a display, a hologram device, or a projector and control circuitry to control a corresponding one of the display, hologram device, and projector. The display device 1060 may include touch circuitry adapted to detect a touch, or sensor circuitry (e.g., a pressure sensor) adapted to measure the intensity of force incurred by the touch.

The audio module 1070 may convert a sound into an electrical signal and vice versa. The audio module 1070 may obtain the sound via the input device 1050 or output the sound via the sound output device 1055 or a headphone of an external electronic device 1002 directly (e.g., wired) or wirelessly coupled with the electronic device 1001.

The sensor module 1076 may detect an operational state (e.g., power or temperature) of the electronic device 1001 or an environmental state (e.g., a state of a user) external to the electronic device 1001, and then generate an electrical signal or data value corresponding to the detected state. The sensor module 1076 may include, for example, a gesture sensor, a gyro sensor, an atmospheric pressure sensor, a magnetic sensor, an acceleration sensor, a grip sensor, a proximity sensor, a color sensor, an infrared (IR) sensor, a biometric sensor, a temperature sensor, a humidity sensor, or an illuminance sensor.

The interface 1077 may support one or more specified protocols to be used for the electronic device 1001 to be coupled with the external electronic device 1002 directly (e.g., wired) or wirelessly. The interface 1077 may include, for example, a high- definition multimedia interface (HDMI), a universal serial bus (USB) interface, a secure digital (SD) card interface, or an audio interface.

A connecting terminal 1078 may include a connector via which the electronic device 1001 may be physically connected with the external electronic device 1002. The connecting terminal 1078 may include, for example, an HDMI connector, a USB connector, an SD card connector, or an audio connector (e.g., a headphone connector).

The haptic module 1079 may convert an electrical signal into a mechanical stimulus (e.g., a vibration or a movement) or an electrical stimulus which may be recognized by a user via tactile sensation or kinesthetic sensation. The haptic module 1079 may include, for example, a motor, a piezoelectric element, or an electrical stimulator.

The camera module 1080 may capture a still image or moving images. The camera module 1080 may include one or more lenses, image sensors, image signal processors, or flashes. The power management module 1088 may manage power supplied to the electronic device 1001. The power management module 1088 may be implemented as at least part of, for example, a power management integrated circuit (PMIC).

The battery 1089 may supply power to at least one component of the electronic device 1001. The battery 1089 may include, for example, a primary cell which is not rechargeable, a secondary cell which is rechargeable, or a fuel cell.

The communication module 1090 may support establishing a direct (e.g., wired) communication channel or a wireless communication channel between the electronic device 1001 and the external electronic device (e.g., the electronic device 1002, the electronic device 1004, or the server 1008) and performing communication via the established communication channel. The communication module 1090 may include one or more communication processors that are operable independently from the processor 1020 (e.g., the AP) and supports a direct (e.g., wired) communication or a wireless communication. The communication module 1090 may include a wireless communication module 1092 (e.g., a cellular communication module, a short-range wireless communication module, or a global navigation satellite system (GNSS) communication module) or a wired communication module 1094 (e.g., a local area network (LAN) communication module or a power line communication (PLC) module). A corresponding one of these communication modules may communicate with the external electronic device via the first network 1098 (e.g., a short-range communication network, such as BLUETOOTH™, wireless-fidelity (Wi-Fi) direct, or a standard of the Infrared Data Association (IrDA)) or the second network 1099 (e.g., a long-range communication network, such as a cellular network, the Internet, or a computer network (e.g., LAN or wide area network (WAN)). These various types of communication modules may be implemented as a single component (e.g., a single IC), or may be implemented as multiple components (e.g., multiple ICs) that are separate from each other. The wireless communication module 1092 may identify and authenticate the electronic device 1001 in a communication network, such as the first network 1098 or the second network 1099, using subscriber information (e.g., international mobile subscriber identity (IMSI)) stored in the subscriber identification module 1096.

The antenna module 1097 may transmit or receive a signal or power to or from the outside (e.g., the external electronic device) of the electronic device 1001. The antenna module 1097 may include one or more antennas, and, therefrom, at least one antenna appropriate for a communication scheme used in the communication network, such as the first network 1098 or the second network 1099, may be selected, for example, by the communication module 1090 (e.g., the wireless communication module 1092). The signal or the power may then be transmitted or received between the communication module 1090 and the external electronic device via the selected at least one antenna.

Commands or data may be transmitted or received between the electronic device 1001 and the external electronic device 1004 via the server 1008 coupled with the second network 1099. Each of the electronic devices 1002 and 1004 may be a device of a same type as, or a different type, from the electronic device 1001. All or some of operations to be executed at the electronic device 1001 may be executed at one or more of the external electronic devices 1002, 1004, or 1008. For example, if the electronic device 1001 should perform a function or a service automatically, or in response to a request from a user or another device, the electronic device 1001, instead of, or in addition to, executing the function or the service, may request the one or more external electronic devices to perform at least part of the function or the service. The one or more external electronic devices receiving the request may perform the at least part of the function or the service requested, or an additional function or an additional service related to the request and transfer an outcome of the performing to the electronic device 1001. The electronic device 1001 may provide the outcome, with or without further processing of the outcome, as at least part of a reply to the request. To that end, a cloud computing, distributed computing, or client-server computing technology may be used, for example.

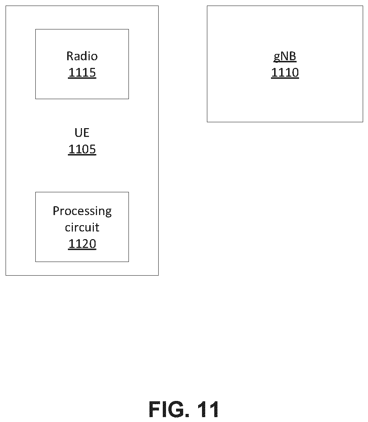

FIG. 11 is a block diagram of a system including a UE and a gNB, according to an embodiment.

Referring to FIG. 11, a system including a UE 1105 and a gNB 1110, in communication with each other, is shown. The UE may include a radio 1115 and a processing circuit (or a means for processing) 1120, which may perform various methods disclosed herein, e.g., the method illustrated in FIG. 9. For example, the processing circuit 1120 may receive, via the radio 1115, transmissions from the network node (gNB) 1110, and the processing circuit 1120 may transmit, via the radio 1115, signals to the gNB 1110.

Embodiments of the subject matter and the operations described in this specification may be implemented in digital electronic circuitry, or in computer software, firmware, or hardware, including the structures disclosed in this specification and their structural equivalents, or in combinations of one or more of them. Embodiments of the subject matter described in this specification may be implemented as one or more computer programs, i.e., one or more modules of computer-program instructions, encoded on computer-storage medium for execution by, or to control the operation of data-processing apparatus. Alternatively or additionally, the program instructions can be encoded on an artificially-generated propagated signal, e.g., a machine-generated electrical, optical, or electromagnetic signal, which is generated to encode information for transmission to suitable receiver apparatus for execution by a data processing apparatus. A computer-storage medium can be, or be included in, a computer-readable storage device, a computer-readable storage substrate, a random or serial-access memory array or device, or a combination thereof. Moreover, while a computer-storage medium is not a propagated signal, a computer-storage medium may be a source or destination of computer-program instructions encoded in an artificially-generated propagated signal. The computer-storage medium can also be, or be included in, one or more separate physical components or media (e.g., multiple CDs, disks, or other storage devices). Additionally, the operations described in this specification may be implemented as operations performed by a data-processing apparatus on data stored on one or more computer-readable storage devices or received from other sources.

While this specification may contain many specific implementation details, the implementation details should not be construed as limitations on the scope of any claimed subject matter, but rather be construed as descriptions of features specific to particular embodiments. Certain features that are described in this specification in the context of separate embodiments may also be implemented in combination in a single embodiment. Conversely, various features that are described in the context of a single embodiment may also be implemented in multiple embodiments separately or in any suitable subcombination. Moreover, although features may be described above as acting in certain combinations and even initially claimed as such, one or more features from a claimed combination may in some cases be excised from the combination, and the claimed combination may be directed to a subcombination or variation of a subcombination.

Similarly, while operations are depicted in the drawings in a particular order, this should not be understood as requiring that such operations be performed in the particular order shown or in sequential order, or that all illustrated operations be performed, to achieve desirable results. In certain circumstances, multitasking and parallel processing may be advantageous. Moreover, the separation of various system components in the embodiments described above should not be understood as requiring such separation in all embodiments, and it should be understood that the described program components and systems can generally be integrated together in a single software product or packaged into multiple software products.

Thus, particular embodiments of the subject matter have been described herein. Other embodiments are within the scope of the following claims. In some cases, the actions set forth in the claims may be performed in a different order and still achieve desirable results. Additionally, the processes depicted in the accompanying figures do not necessarily require the particular order shown, or sequential order, to achieve desirable results. In certain implementations, multitasking and parallel processing may be advantageous.

As will be recognized by those skilled in the art, the innovative concepts described herein may be modified and varied over a wide range of applications. Accordingly, the scope of claimed subject matter should not be limited to any of the specific exemplary teachings discussed above, but is instead defined by the following claims.

## Claims

1. A method performed by a user equipment, UE, for assisting inter-transmission and reception point, TRP, calibration in a coherent joint transmission, CJT, system, the method comprising:

   transmitting, by the UE, calibration assistance information to at least one TRP included in a plurality of TRPs; and
   receiving, by the UE, a transmission from the at least one TRP that has been pre-compensated for at least one synchronization impairment between the plurality of TRPs based on the calibration assistance information.

2. The method of Claim 1, wherein transmitting the calibration assistance information further comprises transmitting the calibration assistance information as an uplink reference signal, UL RS, transmission.

3. The method of Claim 1 or 2, wherein transmitting the calibration assistance information further comprises transmitting the calibration assistance information implicitly based on a UE capability.

4. The method of any one of Claims 1 to 3, further comprising:
   receiving, by the UE, a downlink reference signal, DL RS, indicating a number of TRPs included in the plurality of TRPs having a unified transmission control information, TCI, state with respect to a quasi co-location, QCL, type.

5. The method of any one of Claims 1 to 4, wherein the calibration assistance information is prioritized based on a channel state information, CSI, priority rule.

6. The method of Claim 5, wherein a priority value of the CSI priority rule is configured such that a priority of a first CSI report is the same as a priority of a second CSI report not carrying a layer 1, L1, -reference signal received power, RSRP, or L1-signal-to-interference-plus-noise ratio, SINR.

7. The method of any one of Claims 1 to 6, wherein the UE indicates its capability of supporting multiple simultaneous calibration-assisting reports through a processing unit, PU, occupation in a component carrier.

8. The method of any one of Claims 1 to 7, wherein the pre-compensated transmission received by the UE includes at least one of a delay offset compensation, a frequency offset compensation, or a phase offset compensation for the at least one TRP that is less than or equal to a pre-defined dynamic range or threshold.

9. The method of any one of Claims 1 to 8, further comprising:
configuring the UE with a predefined number of non-zero part, NZP, channel state information, CSI, -resource sets, RSs, via higher layer signaling.

10. The method of Claim 9, wherein a periodic TRS RS is used for each of the predefined number of NZP CSI-RSs.

11. The method of any one of Claims 1 to 10, further comprising:
in a case in which the UE is indicated by a first TCI state and a second TCI state, receiving, by the UE, a physical downlink shared channel, PDSCH, having one or more demodulation reference signal, DMRS, ports:

quasi co-located, QCLed, with a downlink reference signal, DL RS, in the first TCI state, and
QCLed with the DL RS in the second TCI state based on an exclusion of a Doppler shift, an average delay, or both the Doppler shift and the average delay.

12. The method of any one of Claims 1 to 11, wherein the UE is configured via radio resource control, RRC, signaling to perform a precoding matrix indicator, PMI, calculation based on a UE-reported delay offset.

13. A user equipment, UE, comprising:

a memory device; and
a processor configured to execute instructions stored on the memory device, wherein the instructions cause the processor to the method according to any one of claim 1 to 12.

100

Controller module
101

Antenna module
103

Storage module
102

# FIG. 1

**FIG. 2**

**FIG. 3**

**FIG. 4**

501

TRP 1

502

UE

503

TRP 2

UL RS

UL RS

PDCCH/PDSCH

PDCCH/PDSCH

**FIG. 5**

**DL reference time 1**  <u>601</u>

TA1=2τ

TA2=2τ

**DL reference time 2**  <u>602</u>

**DL reference time**  <u>603</u>

TA1=2τ'

TA2=2τ

FIG. 6

701                          702                          703

**TRP 1**                    **UE**                       **TRP 2**

DL RS (TRP1)                 DL RS (TRP2)
PDCCH (TRP1)                 PDCCH (TRP2)

UE calibration report

UL RS                        UL RS

PDSCH                        PDSCH

**FIG. 7**

**FIG. 8**

Transmit calibration
assistance information
901

Receive a pre-
compensated
transmission from at
least one TRP
902

FIG. 9

**1000**

FIG. 10

Radio
1115

UE
1105

Processing
circuit
1120

gNB
1110

FIG. 11